# EUROPÄISCHE PATENTANMELDUNG

(11) **EP 4 273 774 A2**
(43) Veröffentlichungstag der Anmeldung: **08.11.2023**
(21) Anmeldenummer: 23186498.4
(22) Anmeldetag: 25.06.2014
(51) Int. Cl.: G06Q 10/10

(54) **PLATTFORM-VORRICHTUNG ZUR BEREITSTELLUNG QUANTITATIVEN SCHWARM-WISSENS**

(30) Priorität: 28.11.2013 WO PCT/DE2013/100399
(62) Teilanmeldung aus: 14754994.3
(71) Anmelder: Faulwetter, Patrick, Marina del Rey, CA 90292 (US)
(72) Erfinder: Kersting, Björn, 35619 Braunfels (DE)
(74) Vertreter: Kiessling, Christian

(57) **Zusammenfassung**

Bei einer mit einer Mehrzahl mittels einer Kennung identifizierbarer Nutzer-Teilnehmer vernetzbare webplatzierte Plattform-Vorrichtung (100) zum Sammeln und Bearbeiten von auf einer Mehrzahl von jeweils mittels einer vorgebbaren Kodierung identifizierbaren und jeweils einem vorgegebenen Thema zugeordneten Speicherplätzen (110) einer Plattform gespeicherten Informationen seitens der Nutzer-Teilnehmer, wird eine Änderbarkeit gespeicherter Information nach streng vorgebbaren Bearbeitungskriterien seitens der Netz-Teilnehmer unter Schaffen von Schwarm-Wissen im Wesentlichen dadurch erreicht, dass die in eine Mehrzahl von Themen unterteilten Speicherplätze (110) auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz (111) sowie einen dem ersten Speicherplatz (111) zugeordneten zweiten Speicherplatz (112) umfasst, der seitens eines jeden einzelnen Nutzer-Teilnehmers editierbar ist und für eine Eingabe von Zusatz-Informationen bezüglich der auf dem ersten Speicherplatz (111) gespeicherten Initial-Information seitens der Mehrzahl von Nutzer-Teilnehmern ausgelegt ist.

## Beschreibung

Die vorliegende Erfindung betrifft eine mit einer Mehrzahl mittels einer Kennung identifizierbarer Nutzer-Teilnehmer vernetzbare web-platzierte Plattform-Vorrichtung zum Sammeln und Bearbeiten von auf einer Mehrzahl von jeweils mittels einer vorgebbaren Kodierung identifizierbaren und jeweils einem vorgegebenen Thema zugeordneten Speicherplätzen einer Plattform gespeicherten Informationen seitens der Nutzer-Teilnehmer.

Plattform-Vorrichtungen der eingangs genannten Art sind im Stand der Technik für eine Vielzahl von Anwendungen bekannt. Unter anderem werden sie auch im weltweiten Internet betrieben. Die bekannten Plattform-Vorrichtungen weisen indes den Nachteil auf, dass eine spezielle Auswahl vorgebbarer Verknüpfungen, und dabei nach vorgebbaren Kriterien durchführbare Verknüpfungen nicht realisierbar sind. Die Ursache dafür ist unter anderem darin zu sehen, dass die derzeitigen Plattformen Informationen speichern, ohne dass diesen Informationen streng vorgebbare Bearbeitungskriterien und streng vorgebbare Evaluierungskriterien beigemessen werden.

Aufgabe der Erfindung ist es deshalb, eine Plattform-Vorrichtung zu schaffen, mittels derer unter Bereitstellung von Schwarm-Intelligenz in einem ersten Speicher gespeicherte Informationen nach streng vorgebbaren Bearbeitungskriterien seitens der Netz-Teilnehmer bewertbar, und bei Feststellen eines Konsens seitens der Netz-Teilnehmer, mit Zusätzen versehbar oder änderbar sind.

Für eine Plattform-Vorrichtung der eingangs genannten Art wird diese Aufgabe dadurch gelöst, dass die in eine Mehrzahl von Themen unterteilten Speicherplätze auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz sowie einen dem ersten Speicherplatz zugeordneten zweiten Speicherplatz umfasst, der seitens eines jeden einzelnen Nutzer-Teilnehmers editierbar ist und für eine Eingabe von Zusatz-Informationen bezüglich der auf dem ersten Speicherplatz gespeicherten Initial-Information seitens der Mehrzahl von Nutzer-Teilnehmern ausgelegt ist.

Bevorzugte Ausführungsformen der Erfindung sind Gegenstand der Unteransprüche.

Bei der erfindungsgemäßen Plattform-Vorrichtung wird durch die Merkmalskombination, dass die in eine Mehrzahl von Themen unterteilten Speicherplätze auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz sowie einen dem ersten Speicherplatz zugeordneten zweiten Speicherplatz umfasst, der seitens eines jeden einzelnen Nutzer-Teilnehmers editierbar ist und für eine Eingabe von Zusatz-Informationen bezüglich der auf dem ersten Speicherplatz gespeicherten Initial-Information seitens der Mehrzahl von Nutzer-Teilnehmern ausgelegt ist, erreicht, dass über eine Bildung dualer Einheiten Informationen bezüglich sehr spezifischer Bearbeitungsvorgaben bewertbar, bearbeitbar, änderbar und dann speicherbar sind, wobei Informationen jeglicher Art für eine Bewertung und Bearbeitung in Frage kommen, und wobei die jeweiligen Informationen zum Zweck einer Auffindbarkeit in eine Vielzahl unterschiedlicher Themen unterteilt sind.

Ziel und Zweck eines von der Mehrzahl der Nutzer-Teilnehmer durchführbaren Bearbeitungsvorgangs ist es dabei, eine von einem Initial-Autor unter einem ersten Speicherplatz einer dualen Einheit eingelesene Initial-Information seitens der Nutzer-Teilnehmer bewertbar und bearbeitbar zu machen, um die Initial-Information mit einer Verlässlichkeits-Benotung bzw. Verlässlichkeits-Bewertung zu versehen, die am Ende eines erfindungsgemäß durchgeführten Bearbeitungsvorgangs in den ersten Speicherplatz eingetragen ist und für die Allgemeinheit eine übersichtliche Schwarm-Bewertung seitens der Nutzer-Teilnehmer darstellt.

Gemäß einer ersten bevorzugten Ausführungsform der erfindungsgemäßen Vorrichtung ist vorgesehen, dass in dem editierbaren zweiten Speicherplatz Zusatz-Informationen in Form von Schwarm-Bewertungen der auf dem ersten Speicherplatz gespeicherten Informationen seitens der Nutzer-Teilnehmer vornehmbar sind, wobei eine individuelle Bewertung seitens der Nutzer-Teilnehmer mittels einer vorherbestimmt definierten Eingabe ausführbar ist, und wobei eine Schwarm-Bewertung definiert ist als die quantitative Mende bzw. Anzahl von seitens der Nutzer-Teilnehmer vorgenommener vorherbestimmt definierter Eingaben in den zweiten Speicherplatz.

Die individuellen Bewertungen können dabei insbesondere unterteilt sein in positive Bewertungen der auf dem ersten Speicherplatz gespeicherten Informationen und negative Bewertungen der auf dem ersten Speicherplatz gespeicherten Informationen, wobei eine erste Additions-Einrichtung zum Zählen der eingegebenen positiven individuellen Bewertungen sowie ein Speicher zum Speichern dieser Anzahl in dem zweiten Speicherplatz vorgesehen ist, und eine zweite Additions-Einrichtung zum Zählen der eingegebenen negativen individuellen Bewertungen sowie ein Speicher zum Speichern dieser Anzahl in dem zweiten Speicherplatz vorgesehen ist, wobei eine individuelle Bewertung seitens der Nutzer-Teilnehmer mittels einer vorherbestimmt definierten Eingabe ausführbar ist, und eine positive Schwarm-Bewertung definiert ist als die Anzahl vorherbestimmt definierter Eingaben in den zweiten Speicherplatz, die einer positiven Bewertung entsprechen, und eine negative Schwarm-Bewertung definiert ist als die Anzahl vorherbestimmt definierter Eingaben in den zweiten Speicherplatz, die einer negativen Bewertung entsprechen.

Gemäß einer wichtigen bevorzugten Ausführungsform der erfindungsgemäßen Vorrichtung ist vorgesehen, dass die erste Additions-Einrichtung ausgelegt ist, um die auf dem zweiten Speicherplatz gespeicherten positiven Bewertungen zu einer ersten Zahl aufzuaddieren und die zweite Additions-Einrichtung ausgelegt ist, um die auf dem zweiten Speicherplatz gespeicherten negativen Bewertungen zu einer zweiten Zahl aufzuaddieren, wobei eine erste Divisions-Einrichtung vorgesehen ist, um das Verhältnis aus erster und zweiter Zahl in Form eines Prozentsatzes anzugeben.

Des Weiteren ist vorzugsweise eine erste Kopier-Einrichtung vorgesehen, die sukzessive hintereinander die innerhalb vorgebbarer Zeitabschnitte auf dem zweiten Speicherplatz gespeicherten Bewertungen als nützliche Schwarm-Informationen interpretiert und auf den ersten Speicherplatz überträgt und die diesbezüglichen vorherigen Informationen auf dem ersten Speicherplatz überschreibt. Auf diese Weise ist eine Evaluations-Information geschaffen.

Gemäß einer weiteren wichtigen bevorzugten Ausführungsform der erfindungsgemäßen Vorrichtung ist eine Zeitgeber-Einrichtung vorgesehen, die am Endpunkt vorgebbarer konstanter Zeitabschnitte an die erste und zweite Additions-Einrichtung sowie die erste Divisions-Einrichtung und die erste Kopier-Einrichtung Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Gemäß einer den obigen Ausführungsformen ähnlichen, jedoch konzeptionell leicht unterschiedlichen Ausführungsform der erfindungsgemäßen Vorrichtung ist der editierbare zweite Speicherplatz unterteilt in einen Inhalts-Speicherplatz, in den Zusatzinformationen zu den auf dem ersten Speicherplatz gespeicherten Informationen in Form von Ergänzungs-Informationen der auf dem ersten Speicherplatz gespeicherten Informationen einlesbar sind, und einen Bewertungs-Speicherplatz, in den ausschließlich Bewertungen der auf dem zweiten Speicherplatz gespeicherten Ergänzungs-Informationen einlesbar sind, die unterteilt sind positive Bewertungen der auf dem zweiten Speicherplatz gespeicherten Ergänzungs-Informationen und negative Bewertungen der auf dem zweiten Speicherplatz gespeicherten Ergänzungs-Informationen.

Ebenfalls gemäß einer wichtigen bevorzugten Ausführungsform dieser erfindungsgemäßen Vorrichtung ist eine dritte Additions-Einrichtung zum Zählen der eingegebenen positiven individuellen Bewertungen der Ergänzungs-Informationen sowie ein Speicher zum Speichern dieser Anzahl in dem zweiten Speicherplatz vorgesehen, wobei eine vierte Additions-Einrichtung zum Zählen der eingegebenen negativen individuellen Bewertungen der Ergänzungs-Informationen sowie ein Speicher zum Speichern dieser Anzahl in dem zweiten Speicherplatz vorgesehen ist, und wobei eine individuelle Bewertung seitens der Nutzer-Teilnehmer mittels einer vorherbestimmt definierten Eingabe ausführbar ist, und eine positive Schwarm-Bewertung der Ergänzungs-Informationen definiert ist als die Anzahl vorherbestimmt definierter Eingaben in den zweiten Speicherplatz, die einer positiven Bewertung entsprechen, und eine negative Schwarm-Bewertung der Ergänzungs-Informationen definiert ist als die Anzahl vorherbestimmt definierter Eingaben in den zweiten Speicherplatz, die einer negativen Bewertung entsprechen.

Auch ist die dritte Additions-Einrichtung vorzugsweise ausgelegt, um die innerhalb von mittels einer Zeitgeber-Einrichtung vorgegebenen Zeitabschnitte vorherbestimmter Länge auf dem zweiten Speicherplatz gespeicherten positiven Bewertungen zu einer dritten Zahl aufzuaddieren und die vierte Additions-Einrichtung ist dabei ausgelegt, um die innerhalb der von der Zeitgeber-Einrichtung vorgegebenen Zeitabschnitte vorherbestimmter Länge auf dem zweiten Speicherplatz gespeicherten negativen Bewertungen zu einer vierten Zahl aufzuaddieren, wobei eine zweite Divisions-Einrichtung vorgesehen ist, um das Verhältnis aus dritter und vierter Zahl in Form eines Prozentsatzes anzugeben.

Vorzugsweise ist dabei ebenfalls eine zweite Kopier-Einrichtung vorgesehen, die bei Ermitteln in einer zweiten Entscheider-Einrichtung eines vorherbestimmten Verhältnisses von positiven Bewertungen zu negativen Bewertungen der auf dem zweiten Speicherplatz gespeicherten Ergänzungs-Informationen die auf dem zweiten Speicherplatz gespeicherten Ergänzungs-Informationen als gesicherte Schwarm Informationen interpretiert und auf den ersten Speicherplatz überträgt.

Gemäß einer weiteren wichtigen bevorzugten Ausführungsform dieser erfindungsgemäßen Vorrichtung ist vorgesehen, dass die dritte und vierte Additions-Einrichtung sowie die zweite Divisions-Einrichtung und die zweite Kopier-Einrichtung ausgelegt sind, um nach Ablauf eines von der Zeitgeber-Einrichtung vorgegebenen Zeitabschnittes vorgegebener Länge die jeweils zugewiesene Funktion in einem jeweils nachgeordneten folgenden Zeitabschnitt gleicher Länge nach Nullsetzung der dritten und vierten Zahl zu wiederholen.

Gemäß einer den obigen Ausführungsformen ähnlichen, jedoch konzeptionell leicht unterschiedlichen anderen Ausführungsform der erfindungsgemäßen Vorrichtung ist der editierbare zweite Speicherplatz unterteilt in einen Inhalts-Speicherplatz, in den Zusatzinformationen zu den auf dem ersten Speicherplatz gespeicherten Informationen in Form von Korrektur-Informationen der auf dem ersten Speicherplatz gespeicherten Informationen einlesbar sind, und einen Bewertungs-Speicherplatz, in den ausschließlich Bewertungen der auf dem zweiten Speicherplatz gespeicherten Korrektur-Informationen einlesbar sind, die unterteilt sind positive Bewertungen der auf dem zweiten Speicherplatz gespeicherten Korrektur-Informationen und negative Bewertungen der auf dem zweiten Speicherplatz gespeicherten Korrektur-Informationen.

Ebenfalls gemäß einer wichtigen bevorzugten Ausführungsform dieser erfindungsgemäßen Vorrichtung ist eine fünfte Additions-Einrichtung zum Zählen der eingegebenen positiven individuellen Bewertungen der Korrektur-Informationen sowie ein Speicher zum Speichern dieser Anzahl in dem zweiten Speicherplatz vorgesehen ist, und eine sechste Additions-Einrichtung zum Zählen der eingegebenen negativen individuellen Bewertungen der Korrektur-Informationen sowie ein Speicher zum Speichern dieser Anzahl in dem zweiten Speicherplatz vorgesehen ist, wobei eine individuelle Bewertung seitens der Nutzer-Teilnehmer mittels einer vorherbestimmt definierten Eingabe ausführbar ist, und eine positive Schwarm-Bewertung der Ergänzungs-Informationen definiert ist als die Anzahl vorherbestimmt definierter Eingaben in den zweiten Speicherplatz, die einer positiven Bewertung entsprechen, und eine negative Schwarm-Bewertung der Korrektur-Informationen definiert ist als die Anzahl vorherbestimmt definierter Eingaben in den zweiten Speicherplatz, die einer negativen Bewertung entsprechen.

Auch ist die fünfte Additions-Einrichtung vorzugsweise ausgelegt, um die am Endpunkt von mittels einer Zeitgeber-Einrichtung vorgegebenen Zeitabschnitte vorherbestimmter Länge auf dem zweiten Speicherplatz gespeicherten positiven Bewertungen zu einer fünften Zahl aufzuaddieren und die sechste Additions-Einrichtung ist dabei ausgelegt, um die am Endpunkt der von der Zeitgeber-Einrichtung vorgegebenen Zeitabschnitte vorherbestimmter Länge auf dem zweiten Speicherplatz gespeicherten negativen Bewertungen zu einer sechsten Zahl aufzuaddieren, wobei eine dritte Divisions-Einrichtung vorgesehen ist, um das Verhältnis aus fünfter und sechster Zahl in Form eines Prozentsatzes anzugeben.

Ebenfalls ist vorzugsweise eine dritte Kopier-Einrichtung vorgesehen, die bei Ermitteln in einer dritten Entscheider-Einrichtung eines vorherbestimmten Verhältnisses von positiven Bewertungen zu negativen Bewertungen der auf dem zweiten Speicherplatz gespeicherten Korrektur-Informationen die auf dem zweiten Speicherplatz gespeicherten Korrektur-Informationen als gesicherte Schwarm-Informationen interpretiert auf den ersten Speicherplatz überträgt und die diesbezüglichen vorherigen Informationen auf dem ersten Speicherplatz überschreibt.

Gemäß einer weiteren wichtigen bevorzugten Ausführungsform dieser erfindungsgemäßen Vorrichtung ist vorgesehen, dass die fünfe und sechste Additions-Einrichtung sowie die dritte Divisions-Einrichtung und die dritte Kopier-Einrichtung ausgelegt sind, um nach Ablauf eines von der Zeitgeber-Einrichtung vorgegebenen Zeitabschnittes vorgegebener Länge die jeweils zugewiesene Funktion in einem jeweils nachgeordneten folgenden Zeitabschnitt gleicher Länge nach Nullsetzung der fünften und sechsten Zahl zu wiederholen.

Eine vorherbestimmt definierte Eingabe kann im Falle einer positiven individuellen Bewertungen beispielsweise durch Eingabe der arabischen Zahl '+1' realisiert sein, und eine vorherbestimmt definierte Eingab kann im Falle einer negativen individuellen Bewertungen beispielsweise durch Eingabe der arabischen Zahl '-1' realisiert sein.

Vorzugsweise ist jedem der Teilnehmer eine Erstplatzierung einer dualen Einheit mit erstem und zweitem Speicherplatz ermöglicht.

Eine Eingabe weiterer Informationen bezüglich der auf dem ersten Speicherplatz gespeicherten Information kann seitens der Mehrzahl von Nutzer-Teilnehmern sukzessive hintereinander oder auch gleichzeitig erfolgen.

Die erfindungsgemäße Plattform-Vorrichtung wird im Folgenden anhand einer bevorzugten Ausführungsform erläutert, die in den Figuren der Zeichnung dargestellt sind. Es zeigen:
- Fig. 1: in eine Mehrzahl unterschiedlicher Themen unterteilte Speicherplätze 110 der erfindungsgemäßen Plattform-Vorrichtung 100 in Form eines Blockdiagramms;
- Fig. 2: eine prinzipielle Ausgestaltung einer dualen Einheit (DuU) entsprechend einer ersten bevorzugten Ausführungsform der Erfindungsgemäßen Plattform-Vorrichtung 100 in Form eines Blockdiagramms;
- Fig. 3: eine prinzipielle Ausgestaltung einer dualen Einheit (DuU) entsprechend einer zweiten bevorzugten Ausführungsform der Erfindungsgemäßen Plattform-Vorrichtung 100 in Form eines Blockdiagramms;

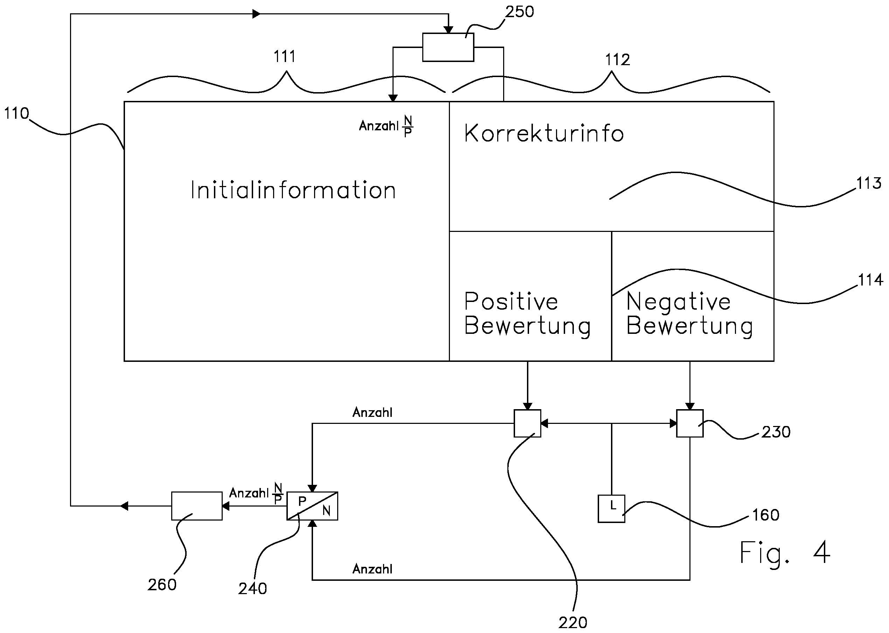

- Fig. 4: eine prinzipielle Ausgestaltung einer dualen Einheit (DuU) entsprechend einer dritten bevorzugten Ausführungsform der Erfindungsgemäßen Plattform-Vorrichtung 100 in Form eines Blockdiagramms.

Die erfindungsgemäße web-platzierte Plattform-Vorrichtung 100 ist mit einer Mehrzahl mittels einer Kennung identifizierbarer Nutzer-Teilnehmer vernetzbar und zum Sammeln und Bearbeiten von auf einer Mehrzahl von jeweils mittels einer vorgebbaren Kodierung identifizierbaren und jeweils einem vorgegebenen Thema zugeordneten Speicherplätzen 110 einer Plattform gespeicherten Informationen seitens der Nutzer-Teilnehmer ausgelegt.

Die in eine Vielzahl unterschiedlicher Themen unterteilten Speicherplätze 110 sind auf der Plattform jeweils von einer dualen Einheit (DuU) gebildet, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz 111 sowie einen dem ersten Speicherplatz 111 zugeordneten zweiten Speicherplatz 112 umfasst, der seitens eines jeden einzelnen Nutzer-Teilnehmers editierbar ist und für eine Eingabe von Zusatz-Informationen bezüglich der auf dem ersten Speicherplatz 111 gespeicherten Initial-Information seitens der Mehrzahl von Nutzer-Teilnehmern ausgelegt ist.

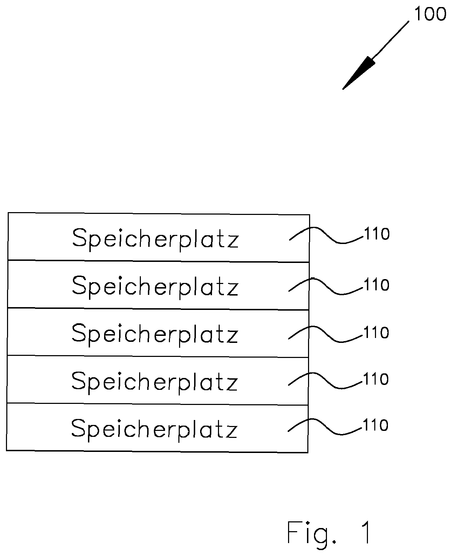

Gemäß der in Figur 1 dargestellten Ausführungsform der erfindungsgemäßen Plattform-Vorrichtung 100 sind in dem editierbaren zweiten Speicherplatz 112 Zusatz-Informationen in Form von Schwarm-Bewertungen der auf dem ersten Speicherplatz 111 gespeicherten Informationen seitens der Nutzer-Teilnehmer vornehmbar, wobei eine individuelle Bewertung seitens der Nutzer-Teilnehmer mittels einer vorherbestimmt definierten Eingabe ausführbar ist, und wobei eine Schwarm-Bewertung definiert ist als die Anzahl von seitens der Nutzer-Teilnehmer vorgenommener vorherbestimmt definierter Eingaben in den zweiten Speicherplatz 112.

Die individuellen Bewertungen sind dabei unterteilt in positive Bewertungen der auf dem ersten Speicherplatz 111 gespeicherten Informationen und negative Bewertungen der auf dem ersten Speicherplatz 111 gespeicherten Informationen, wobei eine erste Additions-Einrichtung 120 zum Zählen der eingegebenen positiven individuellen Bewertungen sowie ein Speicher zum Speichern dieser Anzahl in dem zweiten Speicherplatz 112 vorgesehen ist, und eine zweite Additions-Einrichtung 130 zum Zählen der eingegebenen negativen individuellen Bewertungen sowie ein Speicher zum Speichern dieser Anzahl in dem zweiten Speicherplatz 112 vorgesehen ist, wobei eine individuelle Bewertung seitens der Nutzer-Teilnehmer mittels einer vorherbestimmt definierten Eingabe ausführbar ist, und eine positive Schwarm-Bewertung definiert ist als die Anzahl vorherbestimmt definierter Eingaben in den zweiten Speicherplatz 112, die einer positiven Bewertung entsprechen, und eine negative Schwarm-Bewertung definiert ist als die Anzahl vorherbestimmt definierter Eingaben in den zweiten Speicherplatz 112, die einer negativen Bewertung entsprechen.

Die erste Additions-Einrichtung 120 ist ausgelegt, um die auf dem zweiten Speicherplatz 112 gespeicherten positiven Bewertungen zu einer ersten Zahl aufzuaddieren und die zweite Additions-Einrichtung 130 ist ausgelegt, um die auf dem zweiten Speicherplatz 112 gespeicherten negativen Bewertungen zu einer zweiten Zahl aufzuaddieren, wobei eine erste Divisions-Einrichtung 140 vorgesehen ist, um das Verhältnis aus erster und zweiter Zahl in Form eines Prozentsatzes anzugeben.

Eine erste Kopier-Einrichtung 150 ist vorgesehen, die sukzessive hintereinander die innerhalb vorgebbarer Zeitabschnitte auf dem zweiten Speicherplatz 112 gespeicherten Bewertungen als nützliche Schwarm-Informationen interpretiert und auf den ersten Speicherplatz 111 überträgt und die diesbezüglichen vorherigen Informationen auf dem ersten Speicherplatz 111 überschreibt. Auf diese Weise ist eine Evaluations-Information geschaffen.

Eine Zeitgeber-Einrichtung 160 ist vorgesehen, am Endpunkt vorgebbarer konstanter Zeitabschnitte an die erste 120 und zweite Additions-Einrichtung 130 sowie die erste Divisions-Einrichtung 140 und die erste Kopier-Einrichtung 150 Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

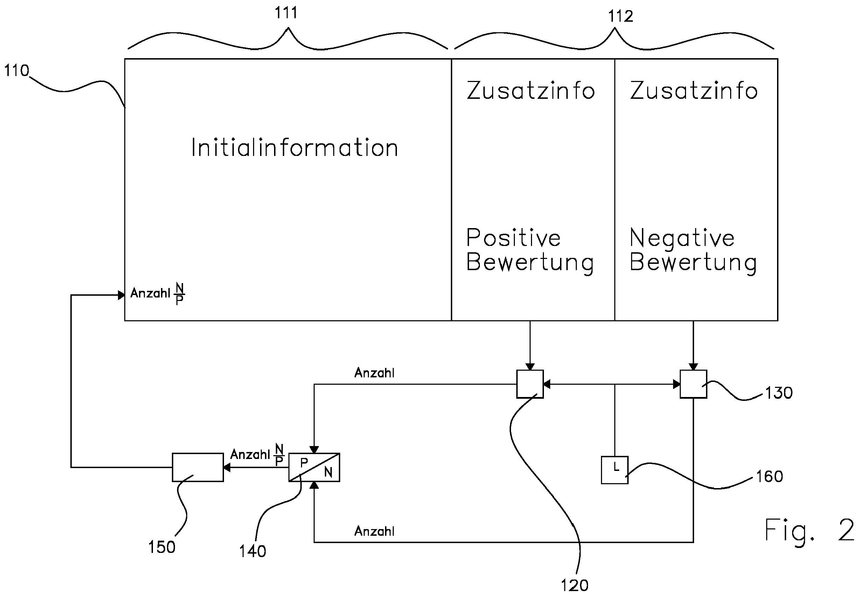

Gemäß der in Figur 2 dargestellten Ausführungsform der erfindungsgemäßen Plattform-Vorrichtung 100 ist der editierbare zweite Speicherplatz 112 unterteilt in einen Inhalts-Speicherplatz 113, in den Zusatzinformationen zu den auf dem ersten Speicherplatz 111 gespeicherten Informationen in Form von Ergänzungs-Informationen der auf dem ersten Speicherplatz 111 gespeicherten Informationen einlesbar sind, und einen Bewertungs-Speicherplatz 114, in den ausschließlich Bewertungen der auf dem zweiten Speicherplatz 112 gespeicherten Ergänzungs-Informationen einlesbar sind, die unterteilt sind positive Bewertungen der auf dem zweiten Speicherplatz 112 gespeicherten Ergänzungs-Informationen und negative Bewertungen der auf dem zweiten Speicherplatz 112 gespeicherten Ergänzungs-Informationen.

Dabei ist eine dritte Additions-Einrichtung 180 zum Zählen der eingegebenen positiven individuellen Bewertungen der Ergänzungs-Informationen sowie ein Speicher zum Speichern dieser Anzahl in dem zweiten Speicherplatz 112 vorgesehen, und eine vierte Additions-Einrichtung 190 zum Zählen der eingegebenen negativen individuellen Bewertungen der Ergänzungs-Informationen sowie ein Speicher zum Speichern dieser Anzahl in dem zweiten Speicherplatz 112 sind vorgesehen, wobei eine individuelle Bewertung seitens der Nutzer-Teilnehmer mittels einer vorherbestimmt definierten Eingabe ausführbar ist, und eine positive Schwarm-Bewertung der Ergänzungs-Informationen definiert ist als die Anzahl vorherbestimmt definierter Eingaben in den zweiten Speicherplatz 112, die einer positiven Bewertung entsprechen, und wobei eine negative Schwarm-Bewertung der Ergänzungs-Informationen definiert ist als die Anzahl vorherbestimmt definierter Eingaben in den zweiten Speicherplatz 112, die einer negativen Bewertung entsprechen.

Die dritte Additions-Einrichtung 180 ist ausgelegt, um die innerhalb von mittels einer Zeitgeber-Einrichtung 160 vorgegebenen Zeitabschnitte vorherbestimmter Länge auf dem zweiten Speicherplatz 112 gespeicherten positiven Bewertungen zu einer dritten Zahl aufzuaddieren, und die vierte Additions-Einrichtung 190 ausgelegt ist, um die innerhalb der von der Zeitgeber-Einrichtung 160 vorgegebenen Zeitabschnitte vorherbestimmter Länge auf dem zweiten Speicherplatz 112 gespeicherten negativen Bewertungen zu einer vierten Zahl aufzuaddieren, wobei eine zweite Divisions-Einrichtung 200 vorgesehen ist, um das Verhältnis aus dritter und vierter Zahl in Form eines Prozentsatzes anzugeben.

Eine zweite Kopier-Einrichtung 210 ist vorgesehen, die bei Ermitteln in einer zweiten Entscheider-Einrichtung 170 eines vorherbestimmten Verhältnisses von positiven Bewertungen zu negativen Bewertungen der auf dem zweiten Speicherplatz 112 gespeicherten Ergänzungs-Informationen die auf dem zweiten Speicherplatz 112 gespeicherten Ergänzungs-Informationen als gesicherte Schwarm-Informationen interpretiert auf den ersten Speicherplatz 111 überträgt.

Die dritte 180 und vierte Additions-Einrichtung 190 sowie die zweite Divisions-Einrichtung 200 und die zweite Kopier-Einrichtung 210 sind ausgelegt, um nach Ablauf eines von der Zeitgeber-Einrichtung 160 vorgegebenen Zeitabschnittes vorgegebener Länge die jeweils zugewiesene Funktion in einem jeweils nachgeordneten folgenden Zeitabschnitt gleicher Länge nach Nullsetzung der jeweils zuvor ermittelten dritten und vierten Zahl zu wiederholen.

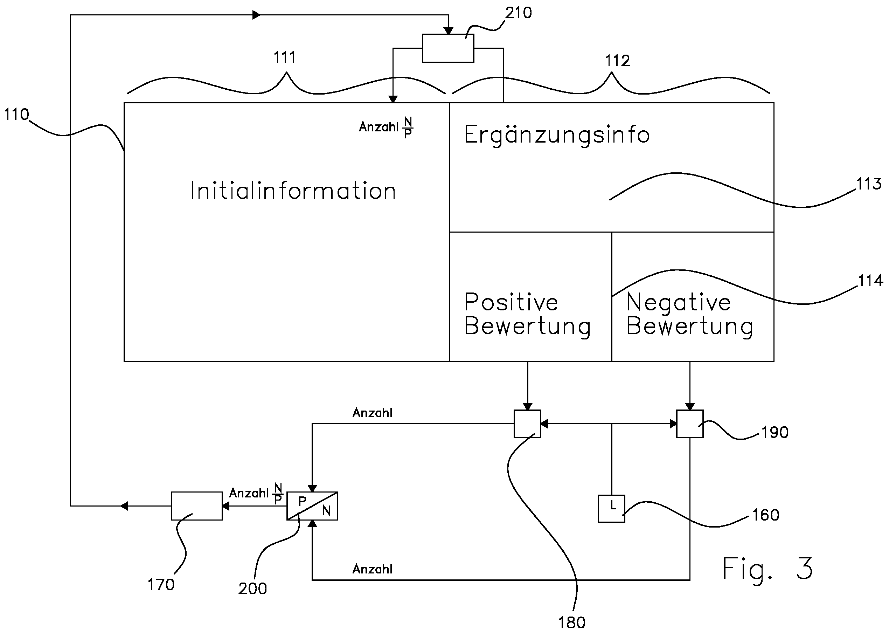

Gemäß der in Figur 3 dargestellten Ausführungsform der erfindungsgemäßen Plattform-Vorrichtung 100 ist der editierbare zweite Speicherplatz 112 unterteilt in einen Inhalts-Speicherplatz 113, in den Zusatzinformationen zu den auf dem ersten Speicherplatz 111 gespeicherten Informationen in Form von Korrektur-Informationen der auf dem ersten Speicherplatz 111 gespeicherten Informationen einlesbar sind, und einen Bewertungs-Speicherplatz 114, in den ausschließlich Bewertungen der auf dem zweiten Speicherplatz 112 gespeicherten Korrektur-Informationen einlesbar sind, die unterteilt sind positive Bewertungen der auf dem zweiten Speicherplatz 112 gespeicherten Korrektur-Informationen und negative Bewertungen der auf dem zweiten Speicherplatz 112 gespeicherten Korrektur-Informationen.

Eine fünfte Additions-Einrichtung 220 ist zum Zählen der eingegebenen positiven individuellen Bewertungen der Korrektur-Informationen sowie ein Speicher zum Speichern dieser Anzahl in dem zweiten Speicherplatz 112 vorgesehen, und
eine sechste Additions-Einrichtung 230 ist zum Zählen der eingegebenen negativen individuellen Bewertungen der Korrektur-Informationen vorgesehen, wobei ein Speicher zum Speichern dieser Anzahl in dem zweiten Speicherplatz 112 vorgesehen ist, und wobei eine individuelle Bewertung seitens der Nutzer-Teilnehmer mittels einer vorherbestimmt definierten Eingabe ausführbar ist, und eine positive Schwarm-Bewertung der Korrektur-Informationen definiert ist als die Anzahl vorherbestimmt definierter Eingaben in den zweiten Speicherplatz 112, die einer positiven Bewertung entsprechen, und eine negative Schwarm-Bewertung der Korrektur-Informationen definiert ist als die Anzahl vorherbestimmt definierter Eingaben in den zweiten Speicherplatz 112, die einer negativen Bewertung entsprechen.

Die fünfte Additions-Einrichtung 220 ist ausgelegt, um die am Endpunkt von mittels einer Zeitgeber-Einrichtung 160 vorgegebenen Zeitabschnitte vorherbestimmter Länge auf dem zweiten Speicherplatz 112 gespeicherten positiven Bewertungen zu einer fünften Zahl aufzuaddieren und die sechste Additions-Einrichtung 230 ausgelegt ist, um die am Endpunkt der von der Zeitgeber-Einrichtung 16 vorgegebenen Zeitabschnitte vorherbestimmter Länge auf dem zweiten Speicherplatz 112 gespeicherten negativen Bewertungen zu einer sechsten Zahl aufzuaddieren, wobei eine dritte Divisions-Einrichtung 240 vorgesehen ist, um das Verhältnis aus fünfter und sechster Zahl in Form eines Prozentsatzes anzugeben.

Eine dritte Kopier-Einrichtung 250 ist vorgesehen, die bei Ermitteln in einer dritten Entscheider-Einrichtung 260 eines vorherbestimmten Verhältnisses von positiven Bewertungen zu negativen Bewertungen der auf dem zweiten Speicherplatz 112 gespeicherten Korrektur-Informationen die auf dem zweiten Speicherplatz 112 gespeicherten Korrektur-Informationen als gesicherte Schwarm-Informationen interpretiert und auf den ersten Speicherplatz 111 überträgt und die diesbezüglichen vorherigen Informationen auf dem ersten Speicherplatz 111 überschreibt.

Die fünfte 220 und sechste Additions-Einrichtung 230 sowie die dritte Divisions-Einrichtung 240 und die dritte Kopier-Einrichtung 250 sind ausgelegt, um nach Ablauf eines von der Zeitgeber-Einrichtung 160 vorgegebenen Zeitabschnittes vorgegebener Länge die jeweils zugewiesene Funktion in einem jeweils nachgeordneten folgenden Zeitabschnitt gleicher Länge nach Nullsetzung der jeweils zuvor ermittelten fünften und sechsten Zahl zu wiederholen.

Bei allen drei obigen Ausführungsformen der erfindungsgemäßen Plattform-Vorrichtung 100 kann eine Eingabe weiterer Informationen bezüglich der auf dem ersten Speicherplatz 111 gespeicherten Information seitens der Mehrzahl von Nutzer-Teilnehmern sukzessive hintereinander oder gleichzeitig erfolgen.

Die oben erläuterten Ausführungsbeispiele der Erfindung dienen lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Mit einer Mehrzahl mittels einer Kennung identifizierbarer Nutzer-Teilnehmer vernetzbare web-platzierte Plattform-Vorrichtung (100) zum Sammeln und Bearbeiten von auf einer Mehrzahl von jeweils mittels einer vorgebbaren Kodierung identifizierbaren und jeweils einem vorgegebenen Thema zugeordneten Speicherplätzen (110) einer Plattform gespeicherten Informationen seitens der Nutzer-Teilnehmer, **dadurch gekennzeichnet, dass** die in eine Mehrzahl von Themen unterteilten Speicherplätze (110) auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz (111) sowie einen dem ersten Speicherplatz (111) zugeordneten zweiten Speicherplatz (112) umfasst, der seitens eines jeden einzelnen Nutzer-Teilnehmers editierbar ist und für eine Eingabe von Zusatz-Informationen bezüglich der auf dem ersten Speicherplatz (111) gespeicherten Initial-Information seitens der Mehrzahl von Nutzer-Teilnehmern ausgelegt ist, wobei
- in dem editierbaren zweiten Speicherplatz (112) Zusatz-Informationen in Form von Schwarm-Bewertungen der auf dem ersten Speicherplatz (111) gespeicherten Informationen seitens der Nutzer-Teilnehmer vornehmbar sind, wobei eine individuelle Bewertung seitens der Nutzer-Teilnehmer mittels einer vorherbestimmt definierten Eingabe ausführbar ist, und wobei eine Schwarm-Bewertung definiert ist als die quantitative Menge von seitens der Nutzer-Teilnehmer vorgenommener vorherbestimmt definierter Eingaben in den zweiten Speicherplatz (112), und
- die individuellen Bewertungen unterteilt sind in positive Bewertungen der auf dem ersten Speicherplatz (111) gespeicherten Informationen und negative Bewertungen der auf dem ersten Speicherplatz (111) gespeicherten Informationen, wobei eine erste Additions-Einrichtung (120) zum Zählen der eingegebenen positiven individuellen Bewertungen sowie ein Speicher zum Speichern dieser Anzahl in dem zweiten Speicherplatz (112) vorgesehen ist, und eine zweite Additions-Einrichtung (130) zum Zählen der eingegebenen negativen individuellen Bewertungen sowie ein Speicher zum Speichern dieser Anzahl in dem zweiten Speicherplatz (112) vorgesehen ist, wobei eine individuelle Bewertung seitens der Nutzer-Teilnehmer mittels einer vorherbestimmt definierten Eingabe ausführbar ist, und
- eine positive Schwarm-Bewertung definiert ist als die Anzahl vorherbestimmt definierter Eingaben in den zweiten Speicherplatz (112), die einer positiven Bewertung entsprechen, und eine negative Schwarm-Bewertung definiert ist als die Anzahl vorherbestimmt definierter Eingaben in den zweiten Speicherplatz (112), die einer negativen Bewertung entsprechen, wobei
- die erste Additions-Einrichtung (120) ausgelegt ist, um die innerhalb von mittels einer Zeitgeber-Einrichtung (160) vorgegebenen Zeitabschnitte vorherbestimmter Länge auf dem zweiten Speicherplatz (112) gespeicherten positiven Bewertungen zu einer ersten Zahl aufzuaddieren und die zweite Additions-Einrichtung (130) ausgelegt ist, um die innerhalb der von der Zeitgeber-Einrichtung (160) vorgegebenen Zeitabschnitte vorherbestimmter Länge auf dem zweiten Speicherplatz (112) gespeicherten negativen Bewertungen zu einer zweiten Zahl aufzuaddieren, wobei eine erste Divisions-Einrichtung (140) vorgesehen ist, um das Verhältnis aus erster und zweiter Zahl in Form eines Prozentsatzes anzugeben, und
- eine erste Kopier-Einrichtung (150) vorgesehen ist, die sukzessive hintereinander die innerhalb vorgebbarer Zeitabschnitte auf dem zweiten Speicherplatz (112) gespeicherten Bewertungen als nützliche Schwarm-Informationen interpretiert und auf den ersten Speicherplatz (111) überträgt und die diesbezüglichen vorherigen Informationen auf dem ersten Speicherplatz (111) überschreibt, und wobei
- eine Zeitgeber-Einrichtung (160) vorgesehen ist, die am Endpunkt vorgebbarer konstanter Zeitabschnitte an die erste (120) und zweite Additions-Einrichtung (130) sowie die erste Divisions-Einrichtung (140) und die erste Kopier-Einrichtung (150) Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

2. Vorrichtung nach Anspruch 1, **dadurch gekennzeichnet, dass** der editierbare zweite Speicherplatz (112) unterteilt ist in einen Inhalts-Speicherplatz (113), in den Zusatzinformationen zu den auf dem ersten Speicherplatz (111) gespeicherten Informationen in Form von Ergänzungs-Informationen der auf dem ersten Speicherplatz (111) gespeicherten Informationen einlesbar sind, und einen Bewertungs-Speicherplatz (114), in den ausschließlich Bewertungen der auf dem zweiten Speicherplatz (112) gespeicherten Ergänzungs-Informationen einlesbar sind, die unterteilt sind positive Bewertungen der auf dem zweiten Speicherplatz (112) gespeicherten Ergänzungs-Informationen und negative Bewertungen der auf dem zweiten Speicherplatz (112) gespeicherten Ergänzungs-Informationen.

3. Vorrichtung nach Anspruch 2, **dadurch gekennzeichnet, dass** eine dritte Additions-Einrichtung (180) zum Zählen der eingegebenen positiven individuellen Bewertungen der Ergänzungs-Informationen sowie ein Speicher zum Speichern dieser Anzahl in dem zweiten Speicherplatz (112) vorgesehen ist, und eine vierte Additions-Einrichtung (190) zum Zählen der eingegebenen negativen individuellen Bewertungen der Ergänzungs-Informationen sowie ein Speicher zum Speichern dieser Anzahl in dem zweiten Speicherplatz (112) vorgesehen ist, wobei eine individuelle Bewertung seitens der Nutzer-Teilnehmer mittels einer vorherbestimmt definierten Eingabe ausführbar ist, und eine positive Schwarm-Bewertung der Ergänzungs-Informationen definiert ist als die Anzahl vorherbestimmt definierter Eingaben in den zweiten Speicherplatz (112), die einer positiven Bewertung entsprechen, und eine negative Schwarm-Bewertung der Ergänzungs-Informationen definiert ist als die Anzahl vorherbestimmt definierter Eingaben in den zweiten Speicherplatz (112), die einer negativen Bewertung entsprechen.

4. Vorrichtung nach Anspruch 3, **dadurch gekennzeichnet, dass** die dritte Additions-Einrichtung (180) ausgelegt ist, um die innerhalb von mittels einer Zeitgeber-Einrichtung (160) vorgegebenen Zeitabschnitte vorherbestimmter Länge auf dem zweiten Speicherplatz (112) gespeicherten positiven Bewertungen zu einer dritten Zahl aufzuaddieren und die vierte Additions-Einrichtung (190) ausgelegt ist, um die innerhalb der von der Zeitgeber-Einrichtung (160) vorgegebenen Zeitabschnitte vorherbestimmter Länge auf dem zweiten Speicherplatz (112) gespeicherten negativen Bewertungen zu einer vierten Zahl aufzuaddieren, wobei eine zweite Divisions-Einrichtung (200) vorgesehen ist, um das Verhältnis aus dritter und vierter Zahl in Form eines Prozentsatzes anzugeben.

5. Vorrichtung nach Anspruch 4, **dadurch gekennzeichnet, dass** eine zweite Kopier-Einrichtung (210) vorgesehen ist, die bei Ermitteln in einer zweiten Entscheider-Einrichtung (170) eines vorherbestimmten Verhältnisses von positiven Bewertungen zu negativen Bewertungen der auf dem zweiten Speicherplatz gespeicherten Ergänzungs-Informationen die auf dem zweiten Speicherplatz (112) gespeicherten Ergänzungs-Informationen als gesicherte Schwarm-Informationen interpretiert auf den ersten Speicherplatz (111) überträgt.

6. Vorrichtung nach den Ansprüchen 4 und 5, **dadurch gekennzeichnet, dass** die dritte (180) und vierte Additions-Einrichtung (190) sowie die zweite Divisions-Einrichtung (200) und die zweite Kopier-Einrichtung (210) ausgelegt sind, um nach Ablauf eines von der Zeitgeber-Einrichtung (160) vorgegebenen Zeitabschnittes vorgegebener Länge die jeweils zugewiesene Funktion in einem jeweils nachgeordneten folgenden Zeitabschnitt gleicher Länge nach Nullsetzung der jeweils zuvor ermittelten dritten und vierten Zahl zu wiederholen.

7. Vorrichtung nach Anspruch 1, **dadurch gekennzeichnet, dass** der editierbare zweite Speicherplatz (112) unterteilt ist in einen Inhalts-Speicherplatz (113), in den Zusatzinformationen zu den auf dem ersten Speicherplatz (111) gespeicherten Informationen in Form von Korrektur-Informationen der auf dem ersten Speicherplatz (111) gespeicherten Informationen einlesbar sind, und einen Bewertungs-Speicherplatz (114), in den ausschließlich Bewertungen der auf dem zweiten Speicherplatz (112) gespeicherten Korrektur-Informationen einlesbar sind, die unterteilt sind positive Bewertungen der auf dem zweiten Speicherplatz (112) gespeicherten Korrektur-Informationen und negative Bewertungen der auf dem zweiten Speicherplatz (112) gespeicherten Korrektur-Informationen.

8. Vorrichtung nach Anspruch 7, **dadurch gekennzeichnet, dass** eine fünfte Additions-Einrichtung (220)zum Zählen der eingegebenen positiven individuellen Bewertungen der Korrektur-Informationen sowie ein Speicher zum Speichern dieser Anzahl in dem zweiten Speicherplatz (112) vorgesehen ist, und eine sechste Additions-Einrichtung (230) zum Zählen der eingegebenen negativen individuellen Bewertungen der Korrektur-Informationen sowie ein Speicher zum Speichern dieser Anzahl in dem zweiten Speicherplatz (112) vorgesehen ist, wobei eine individuelle Bewertung seitens der Nutzer-Teilnehmer mittels einer vorherbestimmt definierten Eingabe ausführbar ist, und eine positive Schwarm-Bewertung der Korrektur-Informationen definiert ist als die Anzahl vorherbestimmt definierter Eingaben in den zweiten Speicherplatz (112), die einer positiven Bewertung entsprechen, und eine negative Schwarm-Bewertung der Korrektur-Informationen definiert ist als die Anzahl vorherbestimmt definierter Eingaben in den zweiten Speicherplatz (112), die einer negativen Bewertung entsprechen.

9. Vorrichtung nach Anspruch 8, **dadurch gekennzeichnet, dass** die fünfte Additions-Einrichtung (220) ausgelegt ist, um die am Endpunkt von mittels einer Zeitgeber-Einrichtung (160) vorgegebenen Zeitabschnitte vorherbestimmter Länge auf dem zweiten Speicherplatz (112) gespeicherten positiven Bewertungen zu einer fünften Zahl aufzuaddieren und die sechste Additions-Einrichtung (230) ausgelegt ist, um die am Endpunkt der von der Zeitgeber-Einrichtung (160) vorgegebenen Zeitabschnitte vorherbestimmter Länge auf dem zweiten Speicherplatz (112) gespeicherten negativen Bewertungen zu einer sechsten Zahl aufzuaddieren, wobei eine dritte Divisions-Einrichtung (240) vorgesehen ist, um das Verhältnis aus fünfter und sechster Zahl in Form eines Prozentsatzes anzugeben.

10. Vorrichtung nach Anspruch 9, **dadurch gekennzeichnet, dass** eine dritte Kopier-Einrichtung (250) vorgesehen ist, die bei Ermitteln in einer dritten Entscheider-Einrichtung (260) eines vorherbestimmten Verhältnisses von positiven Bewertungen zu negativen Bewertungen der auf dem zweiten Speicherplatz (112) gespeicherten Korrektur-Informationen die auf dem zweiten Speicherplatz (112) gespeicherten Korrektur-Informationen als gesicherte Schwarm-Informationen interpretiert und auf den ersten Speicherplatz (111) überträgt und die diesbezüglichen vorherigen Informationen auf dem ersten Speicherplatz (111) überschreibt.

11. Vorrichtung nach den Ansprüchen 9 und 10, **dadurch gekennzeichnet, dass** die fünfe (220) und sechste Additions-Einrichtung (230) sowie die dritte Divisions-Einrichtung (240) und die dritte Kopier-Einrichtung (250) ausgelegt sind, um nach Ablauf eines von der Zeitgeber-Einrichtung (160) vorgegebenen Zeitabschnittes vorgegebener Länge die jeweils zugewiesene Funktion in einem jeweils nachgeordneten folgenden Zeitabschnitt gleicher Länge nach Nullsetzung der jeweils zuvor ermittelten fünften und sechsten Zahl zu wiederholen.

12. Vorrichtung nach einem der vorhergehenden Ansprüchen, **dadurch gekennzeichnet, dass** eine vorherbestimmt definierte Eingabe im Falle einer positiven individuellen Bewertungen durch Eingabe der arabischen Zahl '1' realisiert ist.

13. Vorrichtung nach einem der vorhergehenden Ansprüchen, **dadurch gekennzeichnet, dass** eine vorherbestimmt definierte Eingabe im Falle einer negativen individuellen Bewertungen durch Eingabe der arabischen Zahl '-1' realisiert ist.

14. Vorrichtung nach einem der vorhergehenden Ansprüchen, **dadurch gekennzeichnet, dass** jedem der Teilnehmer eine Erstplatzierung einer dualen Einheit mit erstem (111) und zweitem Speicherplatz (112) ermöglicht ist.
